# EUROPÄISCHE PATENTSCHRIFT

(11) **EP 3 034 190 B1**
(45) Veröffentlichungstag und Bekanntmachung des Hinweises auf die Patenterteilung: **16.08.2017**
(21) Anmeldenummer: 15003597.0
(22) Anmeldetag: 17.12.2015
(51) Int. Cl.: B21C 37/24, B21D 11/06, B21C 37/15, B21D 26/033, B21D 39/04, B21D 53/02, B21D 53/06, B23P 15/26, F16L 9/06, F16L 9/18

(54) **VERFAHREN ZUR BEREITSTELLUNG EINES RIPPENROHRKÖRPERS EINES WÄRMETAUSCHERS UND RIPPENROHRWENDEL**
METHOD FOR PROVIDING A FIN-TUBE BODY OF A HEAT EXCHANGER AND FIN-TUBE COIL
PROCEDE DE PREPARATION D'UN CORPS TUBULAIRE RAINURE D'UN ECHANGEUR DE CHALEUR ET BOBINE DE TUYAU RAINURE

(30) Priorität: 19.12.2014 DE 102014018817
(43) Veröffentlichungstag der Anmeldung: 22.06.2016
(73) Patentinhaber: Schmöle GmbH, 58730 Fröndenberg (DE)
(72) Erfinder: Unger, Markus, 58708 Menden (DE); Höppe, Arnold, 58739 Wickede (DE); Scherner, Michael, 58708 Menden (DE)
(74) Vertreter: Roche, von Westernhagen & Ehresmann

(56) Entgegenhaltungen:
- DE-A1- 10 021 771
- FR-A- 1 309 551
- GB-A- 2 109 913
- US-A- 2 913 009
- US-A- 4 546 819

## Beschreibung

Die Erfindung betrifft zunächst ein Verfahren zur Bereitstellung eines Rippenrohrkörpers eines Wärmetauschers (z. B. bekannt aus GB 2 109 913 A) insbesondere zum Einsatz in Wohngebäuden und eine Rippenrohrwendel eines Wärmetauschers (z. B. bekannt aus DE 100 21 771 A1). Nach dem Stand der Technik ist es bekannt, Brauchwasser in Wärmetauschern zu erhitzen. Das Brauchwasser wird hierbei im Inneren eines Rippenrohrkörpers, insbesondere einer Rippenrohrwendel, durch ein Gehäuse des Wärmetauschers geleitet und hierbei erwärmt.

Aus dem Stand der Technik sind Systeme bekannt, bei welchen der Rippenrohrkörper vollständig aus Edelstahl ausgebildet ist. Aufgrund der besonders geringen Wandstärken von lediglich 0,3 mm oder weniger weisen solche Systeme jedoch einen sehr nachgiebigen Aufbau auf, welcher sich im Einsatz gegebenenfalls als relativ unstabil erweisen kann.

Bei anderen Rippenrohrkörpern des Standes der Technik der Anmelderin sind die Rippen üblicherweise durch Laserverschweissen an dem Rohr angebracht. Edelstahlrohre werden insbesondere verwendet, da diese als im Wesentlichen unbedenklich für die Leitung von Brauchwasser, also beispielsweise Trinkwasser, eingeschätzt werden. Wie beschrieben ist die Stabilität eines derartigen reinen Edelstahlsystems aber nachteilig.

Um die Stabilität derartiger Systeme zu erhöhen, ist es aus druckschriftlich nicht nachweisbarem Stand der Technik desweitern bekannt, einen Rippenrohrkörper aus Kupfer auszubilden. Da gegenüber dem Material Kupfer in einigen Ländern aber Bedenken hinsichtlich des unmittelbaren Kontaktes mit dem Brauchwasser bestehen, wurden Weiterentwicklungen dahingehend getätigt, dass in das Kupferrohr ein sogenannter Inliner aus Edelstahl eingebracht wird. Der Inliner stellt hierbei ein Innenrohr aus Edelstahl bereit, so dass das geleitete Brauchwasser lediglich mit dem Edelstahlrohr in Kontakt gerät, während das umliegende Außenrohr in Form des Kupferrohres für Stabilität sorgt.

Während gerade Abschnitte einer solchen Doppelrohranordnung im Wesentlichen unproblematisch herstellbar sind, zeigt die Praxis, dass räumliche Rippenrohrkörper (wie beispielsweise Rippenrohrkörper in Wendelform) sowohl in ihren nicht-geraden (also kurvigen) Abschnitten und ihren Anschlussabschnitten problembehaftet sind.

So wird ein Rippenrohrkörper des Standes der Technik üblicherweise am Einbauort an einem Anschlussrohr verschweisst oder verlötet. Es zeigt sich hierbei, dass das eingesetzte Flussmittel in den Bereich zwischen Innenrohr und Außenrohr eintreten kann, was zu ungewünschten, korrosionsbegünstigenden Effekten führen kann.

Zudem weisen die gebogenen Abschnitte des Rippenrohrkörpers typischerweise eine unerwünschte Innenstruktur auf: Während die Außenseite des Innenrohrs in den geraden Rippenrohrabschnitten im Wesentlichen glatt an der Innenseite des Außenrohres anliegt, gilt dies typischerweise nicht für den Innenradius eines entsprechenden Bogenabschnittes. Sowohl Innen- als auch Außenrohr werden nämlich bei der Herstellung gemäß dem Stand der Technik in den bogenförmigen Bereichen derart gestaucht, dass das Innenrohr nicht glatt an der Innenseite des Außenrohres anliegt, sondern eher wellig. Hierdurch entstehen zwischen Innenrohr und Außenrohr insbesondere Kavitäten, welche einer optimierten Wärmeleitung entgegenwirken. Zudem werden die Strömungseigenschaften durch die inhomogene Innenseite des Innenrohres gestört.

Aufgabe der vorliegenden Patentanmeldung ist es daher, ein Verfahren zur Bereitstellung eines Rippenrohrkörpers eines Wärmetauschers, insbesondere für die Leitung von Brauchwasser, zu bieten, welches bei einer Doppelrohrstruktur eine optimierte Wärmeleitung bietet.

Die vorliegende Erfindung löst die gestellte Aufgabe mit den Merkmalen des Patentanspruches 1 und daher insbesondere durch folgende Verfahrensschritte:
- Einbringen eines, insbesondere geraden, Innenrohres in ein Außenrohr zur Erlangung einer Rohranordnung,
- Ausformen von Rippen an dem Außenrohr, insbesondere durch einen Walzvorgang,
- Beaufschlagen des Innenrohrs mit einem Supportfluid, insbesondere einer Flüssigkeit,
- Biegen der mit Supportfluid gefüllten Rohranordnung, insbesondere in eine Wendelform.

Mit anderen Worten besteht die Idee der Erfindung darin, eine Rippenrohranordnung bestehend aus einem Innenrohr (typischerweise aus Edelstahl) und einem Außenrohr (typischerweise bestehend aus Kupfer) nicht leer bzw. ungefüllt zu einem dreidimensionalen Rippenrohrkörper zu verformen, sondern erst nachdem der Rippenrohrkörper bzw. die geraden Rohre im Bereich des Innenrohrs mit einem Support-Fluid (vorzugsweise Wasser) gefüllt sind.

Das Support-Fluid bietet bei einem nachfolgenden Biege- oder Formungsvorgang nämlich den Vorteil, dass sich Innen- und Außenrohr, insbesondere im Bereich des Innenradius eines bogenförmigen Abschnittes, während des Biegevorganges an dem Supportfluid "abstützen" können. In diesem Sinne erfolgt im Bereich des Innenradius einer entsprechenden Biegung eine optimierte Kraftableitung. Diese bewirkt, dass das Innenrohr trotz durchgeführtem Biegeprozesses im Wesentlichen glatt an der Innenseite des Außenrohres anliegen bleibt.

Auf diese Weise kann eine homogene, glatte Innenseite des Innenrohres auch in den bogenförmigen Bereichen eines Rippenrohrkörpers erreicht werden, was die Leitungseigenschaften des Rippenrohrkörpers im Inneren optimiert. Zudem wird auch der Wärmeaustausch durch die beiden Rohre hindurch verbessert, da sich keine Kavitäten oder Hohlräume zwischen Außenrohr und Innenrohr ergeben, sondern beide im Wesentlichen glatt aneinander anliegen.

Durch die Ausgestaltung des Rippenrohrkörpers aus stabilisierendem, Rippen aufweisendem Außenrohr und optimierte Leiteigenschaften aufweisendem Inliner oder Innenrohr kann nach dem erfindungsgemäßen Verfahren ein besonders geeigneter Rippenrohrkörper für einen Wärmeaustauscher bereitgestellt werden.

Typischerweise ist das Außenrohr hierbei aus Kupfer ausgestaltet, das Innenrohr aus Edelstahl.

Alternativ ist es grundsätzlich aber auch vorgesehen, das Außenrohr aus Aluminium zu gestalten und/oder das Innenrohr aus Titan.

Üblicherweise stellt das Außenrohr hierbei die Rippen bereit.

Insbesondere ist das Außenrohr typischerweise dicker, also mit einer größeren Wandstärke, ausgebildet als das Innenrohr. In diesem Sinne ist Kupfer wärmeleitfähiger als Edelstahl und das Kupferrohr kann daher relativ dick ausgebildet sein, zur Bereitstellung einer gewissen Stabilität. Als Innenrohr kann ein dünnes, kostenoptimiertes und hinsichtlich der Leitung von Brauchwasser unbedenkliches Edelstahlrohr verwendet werden.

Anspruch 1 ist auf ein Verfahren zur "Bereitstellung" eines Rippenrohrkörpers bezogen, d.h. also insbesondere auf ein Verfahren zur Herstellung eines Rippenrohrkörpers. Bevorzugterweise kann das Verfahren zur Bereitstellung eines Rippenrohrkörpers aber auch Verfahrensschritte zu dessen Anschluss an ein bestehendes Anschlussrohr aufweisen oder zum Anbringen von Adapterelementen, wie beispielsweise Fittinghülsen, innere Stützhülsen oder ähnlichem.

Durch die Verwendung des erfindungsgemäßen Verfahrens kann auf viele, ansonsten übliche Arbeitsschritte verzichtet werden: In diesem Sinne ist beispielsweise kein Verschweißen der beiden Rohre ineinander oder ähnliches notwendig. Vielmehr reicht die Beaufschlagung des Innenrohrs mit dem Supportfluid aus, das Innenrohr in dem Außenrohr festzulegen. Die Festlegung durch das Support-Fluid erfolgt hierbei, ergänzend zu einer Festlegung des Außenrohres an dem Innenrohr während des Ausformens der Rippen an dem Außenrohr. Erfolgt dies in einem Walzvorgang, so sorgt bereits die Druckbeaufschlagung von außen für eine wesentliche Festlegung der beiden Rohre aneinander. Insbesondere in den Bereichen, an welchen an dem Außenrohr keine Rippen angeformt werden, sorgt jedoch die Beaufschlagung mit Supportfluid für eine optimierte Festlegung der Rohre aneinander.

Die im Anspruch 1 aufgeführten Verfahrensschritte erfolgen dabei vorteilhafterweise in der angegebenen Reihenfolge.

Demnach erfolgt zuerst ein Einbringen des Innenrohres an das Außenrohr, insbesondere in einer geraden Form beider Rohre.

Anschließend werden, insbesondere in einem Walzvorgang, Rippen an dem Außenrohr ausgeformt. Dies bietet einen wesentlichen Vorteil, da in diesem Walzvorgang, wie bereits beschrieben, die Rohre aneinander festgelegt werden. Das Ausformen der Rippen erfolgt typischerweise noch im geraden Zustand beider Rohre. Ein separates Anschweißen von Rippen kann auf diese Weise entfallen.

Wird das Innenrohr zur entsprechenden Ausformung der Rippen über einen Dorn geführt, so kann dieser Dorn vorteilhafterweise mit einem rippenartigen Relief versehen sein. Dieses Relief kann bei einem druckbeaufschlagten Ausformen der Außenrippen am Außenrohr, für das Einbringen einer nutartigen Struktur auf der Innenseite des Innenrohrs sorgen. Diese nutartige Struktur des Innenrohres kann vorteilhafterweise für optimierte Strömungseigenschaften im Inneren des Innenrohres sorgen. Insbesondere kann die Nut eine helixartige Struktur aufweisen und weiter insbesondere durchgehend ausgebildet sein. Die Nuten können typischerweise zwischen 0,1 und 0,5 mm, insbesondere etwa 0,3 mm tief in die Innenseite des Innenrohres eingearbeitet sein und zwischen 0,5 und 2 mm, insbesondere etwa 1 mm, breit ausgestaltet sein.

Diese nutartige Ausgestaltung ist allerdings lediglich eine Option. In anderen Anwendungsfällen kann eine im Wesentlichen durchgehend glatte Innenseite des Innenrohres bevorzugt werden.

Bevor die noch im Wesentlichen geraden Rohre dann in eine räumliche Form nach Art eines dreidimensionalen Rippenrohrkörpers gebracht werden, wird die Rohranordnung (insbesondere das Innenrohr) mit einem Support-Fluid beaufschlagt. Typischerweise wird das Support-Fluid hierbei an einem Rohrende in das Innenrohr eingeleitet. Das Innenrohr bzw. die Rohranordnung wird weiter typischerweise an dem anderen Ende verschlossen, insbesondere über ein Ventil. Durch das Verschließen des einen Endes kann insbesondere der im Innenrohr anstehende Druck des Supportfluids erhöht werden, was für eine optimierte Ableitung der entstehenden Biegekräfte insbesondere im Bereich eines Innenradius einer Biegung der Rohranordnung sorgt.

Bei dem Support-Fluid handelt es sich typischerweise um eine Flüssigkeit, da diese jedenfalls theoretisch nahezu inkompressibel ist. Eine Flüssigkeit bietet im Gegensatz zu einem Gas den Vorteil erhöhter Sicherheit im Falle von Druckerhöhungen. Konkret wird typischerweise Wasser als Supportfluid genutzt. Die Flüssigkeit wird dabei so lange durch den Eingang des Innenrohres gepumpt, bis an dem Ausgang des Rohres keine Luft mehr austritt, sondern lediglich noch Wasser. Dann wird der Ausgang des Innenrohres typischerweise über ein Ventil verschlossen. Weiter vorteilhafterweise kann nach dem Verschließen des Rohres der Druck in dem Rohr durch weiteres Zuführen des Support-Fluides, (insbesondere des Wassers) weiter gesteigert werden.

Typischerweise kann der in dem Rohr anstehende Wasserdruck auf zwischen 200 bis 400 bar, insbesondere etwa 300 bar, in sehr kurzer Zeit erhöht werden.

Das dann gefüllte Rohr wird im beaufschlagten Zustand gebogen, beispielsweise unter Nutzung eines Wendelwerkzeuges, wie es aus dem Stand der Technik im Wesentlichen bekannt ist. Die Rohranordnung wird dabei insbesondere in eine gebogene Rohrkörperform überführt. Typischerweise handelt es sich bei dem fertig gestellten Rippenrohrkörper dann um eine Wendel oder auch um eine räumliche Rippenrohrschlange. Bevorzugterweise werden die beiden Enden des Rohres dann zueinander derart ausgerichtet, dass sie im Wesentlichen in die gleiche Eingangs- bzw. Ausgangsrichtung oder Anschlussrichtung zeigen. Nach Fertigstellung der Rippenrohrkörperform kann das Rippenrohr dann geleert werden. Hierzu kann insbesondere das Ventil am Rohrausgang geöffnet werden und das Support-Fluid entweichen.

Zu dem fertiggestellten Rippenkörper ist anzumerken, dass das Innenrohr typischerweise aus dem Außenrohr an mindestens einem Ende heraus vorsteht. Dies verbessert die Möglichkeiten eines Anschließens des Rippenrohrkörpers. Weiter bevorzugt weist das Außenrohr an mindestens einem seiner Enden einen Bereich auf, an welchem keine Rippen ausgeformt sind. Auch dies verbessert die Anschlussmöglichkeiten des gesamten Rippenrohrkörpers.

Angemerkt sei zudem, dass es sich bei dem Innenrohr gemäß einer besonders bevorzugten Ausführungsform um ein Innenrohr aus ferritischem und/oder austenitischem Edelstahl handeln kann.

Außerdem sei ausgeführt, dass von der vorliegenden Erfindung insbesondere derartige Rohranordnungen bzw. Rippenrohrkörper betroffen sind, bei welchen das Innenrohr unmittelbar an dem Außenrohr anliegt, also zwischen dem Innenrohr und dem Außenrohr keine gesonderte Schicht aus einem weiteren Material angeordnet ist. In diesem Sinne besteht der Rippenrohrkörper, abgesehen von seinen Anschlussbereichen, vorteilhafterweise ausschließlich aus Innen- und Außenrohr.

Gemäß einer besonders vorteilhaften Ausführungsform der Erfindung weist das erfindungsgemäße Verfahren noch folgenden Verfahrensschritt auf:
- Verschließen eines Ausgangs des Innenrohres, insbesondere durch ein Ventil, und / oder Verbinden eines Eingangs des Innenrohres mit einer Fördereinrichtung für das Supportfluid.

Demnach wird das Fluid an einem Eingang von einer Fördereinrichtung, beispielsweise einer Pumpe, in das Innenrohr eingeleitet. Desweiteren kann das andere Ende des Innenrohrs, also der Ausgang, verschlossen werden, insbesondere von einem Ventil. Grundsätzlich ist aber auch ein fester Verschluss oder Ähnliches vorstellbar. Das Ventil bzw. der Verschluss des Ausgangs oder einer entsprechenden Halterung kann hierbei insbesondere in das Innenrohr eingreifen. Dies ist besonders für den Fall vorteilhaft, dass das Innenrohr keine nutartige Innenstruktur aufweist. Sollte dies jedoch der Fall sein, kann eine Halterung das Innenrohr beispielsweise auch übergreifen, um einen Verschluss bzw. ein Ventil bereitzustellen. Gleiches gilt für den Eingang und den entsprechenden Anschluss der Fördereinrichtung. Die Fördereinrichtung kann hierbei entweder unmittelbar an dem Innenrohr ansetzen oder aber mit diesem typischerweise über einen Verbindungsschlauch oder Ähnliches verbunden sein. Die Fördereinrichtung bzw. der Verbindungsschlauch sind dann vorzugsweise (insbesondere über eine Halterung) an der Innenseite des Innenrohres festgemacht.

Gemäß einer sehr bevorzugten Ausführungsform der Erfindung ist desweiteren folgender Verfahrensschritt vorgesehen:
- Nachführen von Supportfluid während des Biegens.

Dieser Verfahrensschritt trägt dem Fakt Rechnung, dass sich während eines Biegens der Rohranordnung der Querschnitt im Bereich der bogenförmigen Abschnitte typischerweise leicht verändert. Während die geraden Abschnitte üblicherweise einen kreisrunden Querschnitt aufweisen, bewirkt der Biegeprozess im Bereich der bogenförmigen Abschnitte eine leichte Verformung des Querschnittes hin zu einem geringfügig elliptischeren Querschnitt. Hierdurch kommt es in der Praxis zu einer geringfügigen Vergrößerung des Innenrohrvolumens, so dass - um den Innendruck aufrechtzuerhalten - Support-Fluid, also insbesondere Wasser, während des Biegens nachgeführt oder nachgeleitet bzw. nachgepumpt wird. Auf diese Weise kann der Innendruck im Wesentlichen während des gesamten Biegevorganges konstant gehalten werden. Das Support-Fluid wird in diesem Sinne nachreguliert. Hierfür kann, beispielsweise an der Eingangsseite der Rohranordnung, eine Druckmesseinrichtung vorgesehen werden, welche den im Innenrohr anliegenden Druck kontinuierlich überwacht. Wird ein Abfall des Druckes aufgrund eines Biegeprozesses festgestellt, wird entsprechend automatisch Support-Fluid nachgeführt. Dieser Verfahrensschritt sorgt somit für ein besonders optimiertes Anliegen des Innenrohrs am Außenrohr.

Ist die gewünschte Rippenrohrkörperform erreicht, kann natürlich ein Nachführen von Support-Fluid bzw. eine Nachregulierung entfallen bzw. abgestellt werden.

Vorteilhafterweise weist das erfindungsgemäße Verfahren noch folgenden Schritt auf:
- Einbringen einer nutartigen Reliefstruktur in die Innenseite des Innenrohres, insbesondere während des Ausformens von Rippen an dem Außenrohr.

Dieser Schritt erfolgt vorteilhafterweise während des Schrittes des Ausformens von Rippen an dem Außenrohr. In diesem Sinne kann der Haltedorn für das Innenrohr eine entsprechende inverse Gegenreliefstruktur aufweisen. Die Rippen dieser Reliefstruktur des Dorns können dann insbesondere während eines Walzvorganges eine nutartige Struktur in die Innenseite des Innenrohres einbringen. Sofern eine derartige nutartige, insbesondere helixförmige, Reliefstruktur auf die Innenseite eingebracht ist, ist zu beachten, dass vor einem Biegevorgang das Verschließen des Ausgangs bzw. der Anschluss an eine Fördereinrichtung typischerweise nicht durch ein Verspannen einer Halterung im Inneren des Innenrohrs erfolgt, sondern außen anliegend an dem Innenrohr.

Gemäß einer besonders vorteilhaften Ausgestaltung der Erfindung erfolgt abschließend folgender Verfahrensschritt:
- Verbinden des Rippenrohrkörpers mit einem Anschlussrohr in einem Pressfittingverfahren.

Diese Ausgestaltung der Erfindung bietet den Vorteil, dass hierfür kein Flussmittel, wie beim Schweissen oder Löten, benötigt wird. Insofern kann Flussmittel auch nicht in die Schnittstelle im Anschlussbereich zwischen Innenrohr und Außenrohr des Rippenrohrkörpers fließen.

Hierbei ist insbesondere vorgesehen, dass der Rippenrohrkörper an seinen Enden, also insbesondere am Eingang und am Ausgang des Innenrohrs, von einem anderen Rohr übergriffen wird. Bei dem anderen Rohr kann es sich entweder um das Anschlussrohr am Montageort handeln oder aber auch um eine Adapterhülse, ein sogenanntes Fitting. Sofern eine Fittinghülse genutzt wird, kann die Fittinghülse herstellerseitig bereits im Rahmen eines Press-Fitting-Verfahrens an dem Rippenrohrkörper angebracht werden. Montageortseitig muss dann lediglich ein Anschlussrohr noch mit der Fittinghülse verpresst werden, um einen Anschluss zu ermöglichen und einen Rippenrohrkörper erfindungsgemäß bereitzustellen. Auf diese Weise kann auf jeden Fall auf Flussmittel verzichtet werden und es wird eine optimierte Korrosionsbeständigkeit erreicht. Das Press-Fitting-Verfahren umfasst hierbei typischerweise ein Verpressen des Anschlussrohres oder der Fitting-Hülse gegenüber dem Rippenrohrkörper, wobei durch den Verpressvorgang insbesondere auch ein Formschluss erreicht wird.

Vorteilhafterweise ist auch folgender Verfahrensschritt vorgesehen:
- Verbinden eines aus dem Außenrohr vorstehenden Befestigungsabschnittes des Innenrohres mit einer Fittinghülse.

In diesem Sinne bietet das Innenrohr einen Befestigungsabschnitt, welcher aus dem Außenrohr hervorsteht. Wird dieser Bereich mit einer Fittinghülse verpresst, so wird insbesondere ausgeschlossen, dass die zu leitende Flüssigkeit in den Bereich zwischen Innenrohr und Außenrohr gelangen kann. Bevorzugt übergreift die Fittinghülse hierfür den Befestigungsabschnitt. Alternativ kann dieser Befestigungsabschnitt (gegebenenfalls montageortseitig), aber auch direkt, also ohne Zwischenschaltung einer Fittinghülse, mit einem Anschlussrohr verpresst werden.

Gemäß einer erfindungsgemäßen Ausgestaltung des vorliegenden Verfahrens kann folgender Verfahrensschritt vorgesehen sein:
- Verbinden eines rippenlosen Anbindungsabschnittes des Aussenrohres mit einer Fittinghülse.

In diesem Sinne ist das Außenrohr derart ausgestaltet, dass es an mindestens einem seiner Endbereiche, bevorzugt an beiden Endbereichen, einen Anschlussbereich vorsieht, welcher nicht mit Rippen, sondern im Wesentlichen glatt, ausgebildet ist. Dieser rippenlose Anbindungsabschnitt kann hierbei mit einer Fittinghülse verpresst werden, wobei die Fittinghülse üblicherweise den Anbindungsabschnitt übergreift.

Besonders bevorzugt ist es, eine Fittinghülse vorzusehen, welche sowohl einen aus dem Außenrohr vorstehenden Befestigungsabschnitt des Innenrohres übergreift als auch den rippenlosen Anbindungsabschnitt des Außenrohres. Die Fittinghülse kann insofern entlang ihrer axialen Erstreckung an zwei unterschiedlichen Orten verpresst werden, nämlich insbesondere am Außenrohr (im Anbindungsabschnitt) und zudem am Innenrohr (am Befestigungsabschnitt). Auf diese Weise wird eine besonders hohe Stabilität des Rippenrohrkörperanschlusses erreicht, da sich die Fittinghülse nicht nur am Innenrohr, sondern auch am üblicherweise dickeren, Außenrohr abstützt. Zudem wird verhindert, dass Schutz- oder Außenflüssigkeit in den Bereich zwischen den beiden Rohren gelangt.

Um die Sicherheit eines Press-Fitting-Verfahrensschrittes weiter zu erhöhen, kann vorteilhafterweise noch folgender Verfahrensschritt vorgesehen werden:
- Einbringen einer Stützhülse in das Innenrohr in dem mit dem Anschlussrohr zu verbindenden Bereich.

Durch das Einbringen einer solchen Stützhülse, welche typischerweise im fertig montierten Zustand im Innenrohr verbleibt, kann das Innenrohr mit einem Anschlussrohr oder einer Fitting-Hülse verpresst werden, ohne dass es im Bereich des Anschlusses besonders materialsteif ausgebildet sein muss. Mit anderen Worten kann das Innenrohr oder der Inliner somit homogen ausgebildet werden, wobei trotzdem eine Anschlussmöglichkeit im Rahmen eines Press-Fitting-Verfahrenschrittes ermöglicht wird. Eine solche Stützhülse kann beim Anschließen des Innenrohres an eine Fittinghülse bereits werksseitig im Rippenrohrkörper verarbeitet werden.

Alternativ ist es auch vorstellbar, dass der Rippenrohrkörper mit einer entnehmbaren bzw. lose zugeordneten, einsetzbaren Stützhülse ausgeliefert wird und dann montageortseitig ein Monteur das Innenrohr mit einem Anschlussrohr (oder einer dort vorhandenen Pressfittinghülse) vor Ort unter Nutzung der einführbaren Stützhülse verpressen kann. Die Stützhülse verbleibt hiernach in jedem Fall unverlierbar im Innenrohr.

Gemäß eines weiteren Aspekts der vorliegenden Erfindung wird die Aufgabe durch eine Rippenrohrwendel eines Wärmetauschers nach Patentanspruch 9 gelöst. Diese kann insbesondere nach einem der Ansprüche 1 bis 8 hergestellt bzw. bereitgestellt werden. Diese Rippenrohrwendel ist insbesondere dadurch gekennzeichnet, dass sie ein Innenrohr aus Edelstahl oder Titan und ein Außenrohr aus Kupfer oder Aluminium umfasst, wobei das Außenrohr gewalzte Rippen aufweist und das Innenrohr mit seiner Aussenseite im Wesentlichen glatt an der Innenseite des Außenrohres anliegt.

Die erfindungsgemäße Rippenrohrwendel ermöglicht durch die gewählte Materialkombination hierbei insbesondere eine relativ dünne Ausgestaltung des Innenrohrs oder Inliners, wobei das Material des Inliners insbesondere brauchwasserneutrale Eigenschaften aufweist. Das Außenrohr kann dann kräftiger oder dicker ausgestaltet werden und gibt der Rippenrohrwendel eine Formstabilität, wobei die Wärmeübertragung zusätzlich durch die ausgewalzten, also insbesondere nicht separat angebrachten, Rippen verbessert wird. Dadurch, dass das Innenrohr glatt an der Innenseite des Außenrohres anliegt und keine Inhomogenitäten im Anliegen in den bogenförmigen Bereichen aufweist, kann auch das strömungstechnische Verhalten der Rippenrohrwendel verbessert werden.

Bezüglich Patentanspruch 9 und aller folgenden Patentansprüche sei darauf hingewiesen, dass sämtliche, bisher beschriebenen Vorteile und Ausführungen, insbesondere zu den Patentansprüchen 1 bis 8, äquivalent gelten sollen.

Umgekehrt sollen für die voranstehenden Verfahrensansprüche 1 bis 8 sämtliche im Zusammenhang mit dem Rippenrohrwendel beschriebenen Vorteile ebenfalls gelten. Auf eine separate Auflistung oder Wiederholung wird daher aus Gründen der Zweckmäßigkeit an dieser Stelle verzichtet.

Bevorzugterweise weist die Rippenrohrwendel in mindestens einem Endbereich, vorzugsweise in beiden Endebereichen, eine in das Innenrohr eingeführte oder einführbare Stützhülse auf. Die Stützhülse ermöglicht einen verbesserten Anschluss der Rippenrohrwendel an ein montageseitiges Anschlussrohr. Die Stützhülse kann hierbei insbesondere unverlierbar in dem Innenrohr gehalten sein. Die Stützhülse ist vorteilhafterweise dem Bereich des Innenrohrs zugeordnet, welcher aus dem Außenrohr heraussteht.

Vorteilhafterweise steht das Innenrohr an mindestens einem Ende zur Bereitstellung einer Anschlussfläche aus dem Außenrohr heraus, wobei an der Anschlussfläche insbesondere eine Fittinghülse verpresst angebracht ist. Auf diese Weise kann werkseitig eine Rippenrohrwendel bereitgestellt werden, welche auf sehr leichte Art und Weise montageortseitig an ein Anschlussrohr oder Ähnliches anbringbar ist. In dem Fall wird dann lediglich die Fittinghülse noch mit einem Anschlussrohr verpresst.

Die Fittinghülse kann zusätzlich zu einer Anordnung bzw. Verpressung an der Anschlussfläche auch noch mit einer Anbindungsfläche des Außenrohres verpresst werden. Vorteilhafterweise wird diese Anbindungsfläche dabei von einem Bereich des Außenrohres bereitgestellt, welcher keine Rippen aufweist. Das Innenrohr ragt hierbei vorteilhafterweise aus dem Bereich des Außenrohres hervor, an welchem keine Rippen ausgeformt sind. In diesem Sinne kann eine Fittinghülse sowohl über die Anschlussfläche des Innenrohrs als auch über die Anbindungsfläche des Außenrohres übergestülpt und dort jeweils verpresst werden.

Weitere Vorteile der Erfindung ergeben sich aus den gegebenenfalls nicht zitierten Unteransprüchen sowie aus der nun folgenden Figurenbeschreibung. Darin zeigen:
- Fig. 1: ein Einbringen eines geraden Innenrohres in ein gerades Außenrohr in einer sehr schematischen Ansicht,
- Fig. 2: in einer ebenfalls sehr schematischen, abgebrochen dargestellten Ansicht das Ausformen von Rippen an dem Außenrohr in einem Walzvorgang,
- Fig. 3a: in einer äußerst schematischen Ansicht ein Wendelwerkzeug zum Biegen einer Rohranordnung unter schematischer Weglassung der Rippen des Außenrohres,
- Fig. 3b: eine schematische Ansicht eines Ventilaufsatzes für den Ausgang der Rohranordnung gemäß Fig. 3a,
- Fig. 3c: einen sehr schematischen Anschlusseinsatz für einen Eingang der Rohranordnung gemäß Fig. 3a,
- Fig. 4: eine schematische geschnittene Darstellung eines bogenförmigen Bereiches eines Rippenrohrkörpers des Standes der Technik,
- Fig. 5: in einer Ansicht gemäß Fig. 4 ein solcher Bereich eines erfindungsgemäßen Rippenrohrkörpers, hergestellt in einem erfindungsgemäßen Verfahren,
- Fig. 6: eine schematische Außenansicht eines fertiggestellten Rippenrohrkörpers samt abgebrochen dargestelltem Wärmetauschergehäuse,
- Fig. 7: der Rippenrohrkörper aus Fig. 6 in einer Ansicht gemäß Ansichtspfeil VII in Fig. 6,
- Fig. 8: in einer sehr schematischen Schnittdarstellung eine Ansicht eines Endebereiches bzw. Anschlussbereiches des Rippenrohrkörpers in den Figuren 6 und 7 und
- Fig. 9: eine sehr schematische, teilgeschnittene Ansicht des in Fig. 6 mit IX gekennzeichnetem Bereiches samt eingeführter Stützhülse sowie überstülpter und befestigter Fittinghülse.

Der nachfolgenden Figurenbeschreibung sei vorangestellt, dass gleiche oder vergleichbare Teile gegebenenfalls mit identischen Bezugszeichen versehen sind, teilweise unter Hinzufügung kleiner Buchstaben oder von Apostrophs.

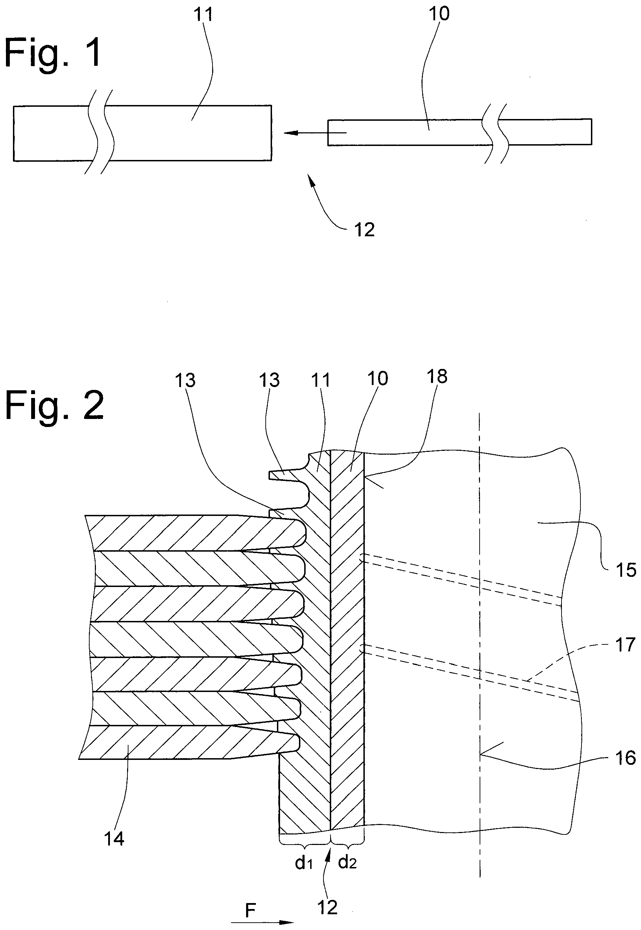

Fig. 1 zeigt einen ersten Schritt des erfindungsgemäßen Verfahrens zur Bereitstellung eines Rippenrohrkörpers eines Wärmetauschers. So wird ein gerades Edelstahlrohr als Innenrohr 10 in ein Außenrohr 11 aus Kupfer eingebracht. Hierzu wird das Innenrohr 10 in das Außenrohr 11 eingeführt oder das Außenrohr 11 über das Innenrohr 10 übergesteckt. In der dargestellten Fassung sind beide Rohre gerade ausgebildet und insbesondere, was der Zeichnung aber nicht zu entnehmen ist, ist das Innenrohr 10 etwas länger ausgebildet als das Außenrohr 11. Das Außenrohr 11 weist üblicherweise eine dickere Wandstärke auf.

Das Edelstahlrohr 10 kann auch im Wesentlichen aus Titan bestehen. Das Kupferrohr 11 kann auch durch ein Aluminiumrohr ersetzbar sein.

Zusammen bildet das Außenrohr 11 samt eingeführtem Innenrohr 10 eine Rohranordnung 12 aus. Die Rohranordnung 12 ist dabei dementsprechend auch zunächst gerade, d.h. ohne wesentliche Biegungen oder Kurven ausgebildet.

In einem anschließenden Verfahrensschritt wird die derart bereitgestellte Rohranordnung 12 zwecks Ausformung von Rippen 13 an dem Außenrohr 11 gewalzt. Diesbezüglich ist in Fig. 2 ein Walzwerkzeug 14 lediglich angedeutet. Hierbei kann jedes geeignete Walzwerkzeug eingesetzt werden, welches in der Lage ist, Rippen 13 aus dem Außenrohr 11 auszuformen, insbesondere unter Einsatz einer Druckbeaufschlagung der Rohranordnung 12. Während des Walzprozesses ist die Rohranordnung 12 typischerweise auf einem Walzdorn 15 gelagert, wobei insbesondere das Innenrohr 10 unmittelbar auf dem Walzdorn 15 aufliegt.

Fig. 2 ist insbesondere zu entnehmen, dass das Außenrohr 11 eine größere Materialstärke d₁ aufweist als das Innenrohr 10, welches eine geringere Wand- oder Materialstärke d₂ aufweist. Dies ist insbesondere notwendig, da aus dem Außenrohr 11 die Rippen 13 herausgeformt werden müssen, wozu einiges an Materialstärke unumgänglich ist. Außerdem ist das Innenrohr 10 in der Regel aus einem wertvolleren Material ausgestaltet und wird daher aus Kostengründen dünner ausgebildet.

Ausweislich Fig. 2 kann der Dorn 15 beispielsweise um seine Längsachse 16 rotieren, wobei das Walzwerkzeug beispielsweise stationär, insbesondere rotatorisch, angeordnet werden kann.

Von besonderer Wichtigkeit ist vorliegend zudem, dass das Walzwerkzeug während des Ausformens der Rippen 13 eine Anpresskraft in Richtung F auf die Rohranordnung 12 ausübt. Hierbei wird insbesondere das Innenrohr 10 von dem Außenrohr 11 derart beaufschlagt, dass das Innenrohr 10 nach Abschluss des Walprozesses in dem Außenrohr 11 gehalten ist.

Fig. 2 zeigt in Strichlinie eine alternative Ausgestaltung, insbesondere des Walzdorns 15. Hier ist nämlich eine spiralartig oder helixartig umlaufende Erhöhung 17 des Dorns 15 in Strichlinien angedeutet, wobei aus Gründen der Übersichtlichkeit lediglich zwei derartige Umläufe dargestellt sind. Für den Fall, dass der Dorn 15 mit einer derartigen umlaufenden Erhöhung 17 vorgesehen ist, entsteht auf der Innenseite 18 des Innenrohres 10 eine komplementäre inverse helixartige Nutstruktur. In diesem Fall wäre die Innenseite 18 des Innenrohres 10 daher nicht homogen glatt ausgebildet, sondern wiese eine helixartige Struktur auf, welche insbesondere das Strömungsverhalten des in der Rohranordnung 12 geleiteten Brauchwassers verbessern kann.

Abschließend lässt sich zur Fig. 2 anmerken, dass die Rippen 13 gemäß dem vorgestellten Verfahren somit nicht separat an dem Außenrohr 11 angeordnet werden müssen (beispielsweise durch einen Schweissvorgang) sondern vielmehr materialeinheitlich und einstückig aus der Oberfläche des Rohres 11 herausgearbeitet sind. Die Rippen 13 bieten dabei eine wesentliche Verbesserung der Wärmetauscheigenschaften des gesamten Wärmetauschersystems.

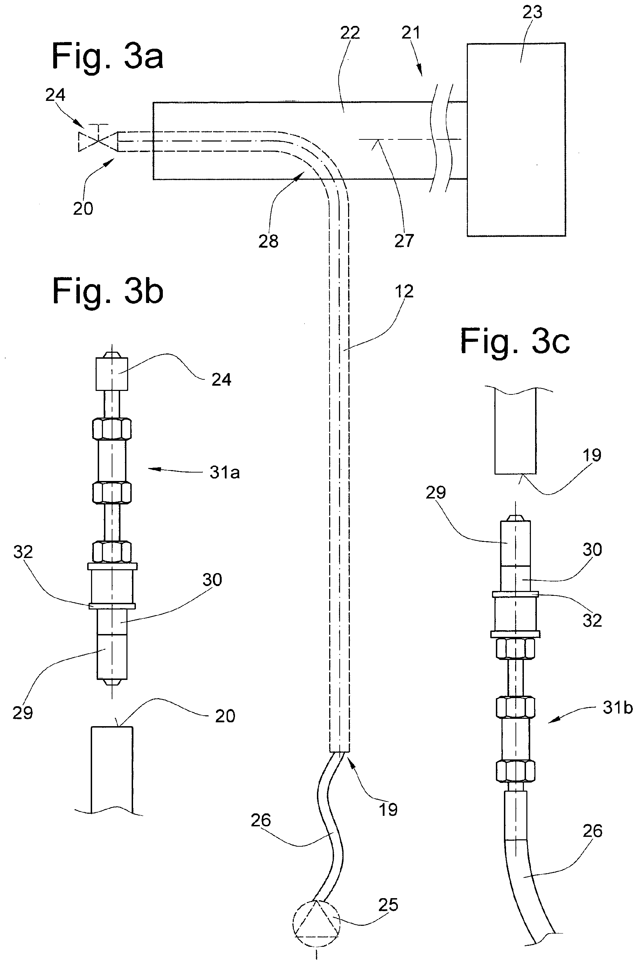

Aus Gründen der Übersichtlichkeit sind gerade diese Rippen 13 in Fig. 3 aber nicht dargestellt. Fig. 3a zeigt dabei in einer sehr schematischen Aufsicht die Rohranordnung 12, wobei die Rippen 13, wie erwähnt, nicht explizit dargestellt sind. Die Rohranordnung 12 weist einen Eingang 19 auf sowie einen Ausgang 20 auf.

Im Bereich des Ausgangs 20 wird das Rohr einem Wendelwerkzeug 21 zugeordnet. Dieses Wendelwerkzeug 21 dient dabei der Formgebung des späteren Rippenrohrkörpers indem die Rohranordnung 12 auf einer rotierbaren Welle 22 des Wendelwerkzeuges 21 aufgewickelt wird. Die Welle 22 wird hierzu insbesondere motorisch angetrieben durch eine einer Basis 23 des Wendelwerkzeuges 21 zugeordnete Motoreinheit.

Bevor der eigentliche Biege- oder Wendelprozess beginnt, wird der Ausgang 20 jedoch zunächst mit einem Absperrventil 24 versehen, welches in Fig. 3a lediglich schematisch dargestellt ist. Gleichsam wird der Ausgang 19 mit einer Fördereinrichtung 25 nach Art einer Pumpe verbunden. Hierzu kann die Fördereinrichtung 25 entweder unmittelbar an dem Ausgang 19 angeordnet sein oder mit diesem beispielsweise über einen Schlauch 26 verbunden werden (die Festlegung von Ventil 24 und Schlauch 26 an Ausgang 20 bzw. Eingang 19 wird weiter unten noch genauer beschrieben).

Nachdem die Fördereinrichtung 25 mit dem Ausgang 19 der Rohranordnung 12 verbunden ist, kann die Fördereinrichtung ein Fluid in die Rohranordnung 12 einleiten, insbesondere eine Flüssigkeit, vorzugsweise Wasser. Dementsprechend kann es sich bei der Fördereinrichtung 25 um eine Wasserpumpe handeln. Sofern die geförderte Flüssigkeit sämtliche Luft aus dem Ausgang 20 der Rohranordnung 12 herausgetrieben hat, kann das Absperrventil 24 geschlossen werden. Ab diesem Zeitpunkt erfolgt im Inneren der Rohranordnung 12, also genau genommen in dem Innenrohr 10, ein Druckaufbau des eingeleiteten Wassers bis hin auf einen Wert von 200 bis 400, insbesondere auf etwa 300 bar. Der in dem Rohr entstehende Druck kann über ein nicht dargestelltes Druckmessgerät gemessen werden, welches insbesondere dem Eingang 19 zugeordnet sein kann. Wird der gewünschte Druck erreicht, kann der Biegevorgang beginnen und das Wendelwerkzeug 21 aktiv werden.

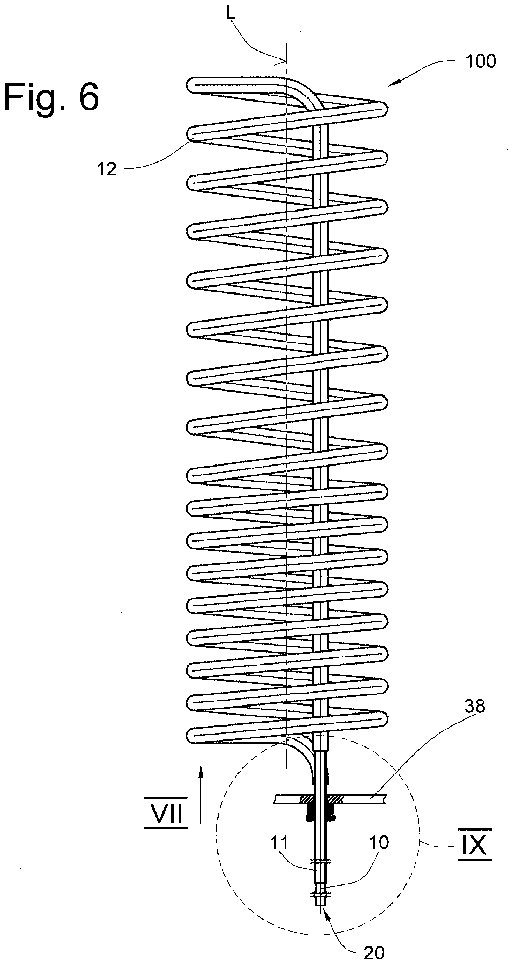

Durch eine Drehung der Wendel 22 um ihre Mittelachse 27 wird die Rohranordnung 12 zu einem Wendelkörper aufgerollt. Ein solcher Wendelkörper 100 ist exemplarisch in Fig. 6 dargestellt.

Zu Fig. 3a ist anzumerken, dass die Pumpe 25 das Support-Fluid, insbesondere Wasser, kontinuierlich, also während des gesamten Wendelvorganges nachregulieren kann, damit im Inneren der Rohranordnung 12 stets ein konstanter Druck anliegt. Beim Wendelvorgang kann es dazu kommen, dass sich die Querschnittsform der Rohranordnung, insbesondere des Innenrohres 10, von einer kreisrunden Form in Richtung einer leicht ellipsoiden Form verformt, was zu einem Druckabfall in dem Innenrohr 10 führen kann. In diesem Fall haben Praxistests gezeigt, dass der Wendelvorgang verbessert wird, sofern Support-Fluid nachgeführt wird.

Fig. 3a zeigt eine erste Biegung 28 der Rohranordnung 12, welche jedoch nicht durch die Rotation der Welle 22 entsteht, sondern entweder manuell geformt wird oder von dem Wendelwerkzeug 21 auf andere Art durchgeführt wird. Hierbei soll erreicht werden, dass sich der Ausgang 20 später in Längsrichtung der Wendel erstreckt bzw. entlang dieser ausgerichtet ist. Auch das Herstellen der Biegung 28 kann jedoch bereits unter innerer Druckbeaufschlagung erfolgen.

Sobald die gesamte Rohranordnung 12 um die Welle 22 aufgewickelt und somit die Wendelform des Rippenrohrkörpers 100 erreicht ist, kann die Pumpe 25 abgestellt und das Ventil 24 zum Ablass des Wassers bzw. des Support-Fluids geöffnet werden. Anschließend können das Ventil 24 sowie der Schlauch 26 dem Rippenrohrkörper wieder entnommen werden.

Diesbezüglich sei auf den grundsätzlichen Aufbau der Anschlüsse oder Halterungen für das Ventil 24 gemäß Fig. 3b und den Schlauch 26 nach Fig. 3c verwiesen: Beide Anschlussvorrichtungen weisen hierbei grundsätzlich zunächst Spreizhülsen 29 auf, sowie einen weiteren Abschnitt 30, welcher eine krallenartige Oberfläche bietet. Sowohl die Spreizhülse 29 als auch der Abschnitt 30 werden zur Montage des jeweiligen Anschlusses 31 bis zu einem ersten Wulst 32 in das Innenrohr 10 der Rohranordnung 12 eingebracht. Anschließend kann der in dem Innenrohr 10 angeordnete Abschnitt der Befestigungsvorrichtung 31 an der Innenseite des Innenrohres 10 verspannt werden. Hierzu kann der Mittelbereich der Befestigungsvorrichtung 31 manuell verdreht werden, was zu einem Ausspreizen der Spreizflächen der Spreizhülse 29 führt, sowie zu einem Ausfahren des Krallenabschnittes 30.

Nach Durchführung eines solchen Befestigungsschrittes sind das eigentliche Ventil 24 bzw. der Schlauch 26 fest an dem Ausgang 20 bzw. dem Eingang 19 der Rohranordnung 12 angeordnet. Zum jeweiligen Abnehmen des Ventils 24 bzw. des Schlauches 26 kann dann der Mittelteil der Befestigungsvorrichtung 3a gegensätzlich gedreht werden, was zu einem Einfahren der Krallen 30 bzw. zu einem Einsinken der Spreizhülse 29 führt. Die Befestigungsanordnung 31 a bzw. 31 b kann anschließend problemlos wiederverwendet und zur Herstellung einer neuen Rippenrohrkörperwendel genutzt werden, wobei das besagte Rippenrohr ebenfalls wieder durch die Nutzung von Ventil 24 und Schlauch 26 bzw. Pumpe 25 mit Support-Fluid beaufschlagt werden kann.

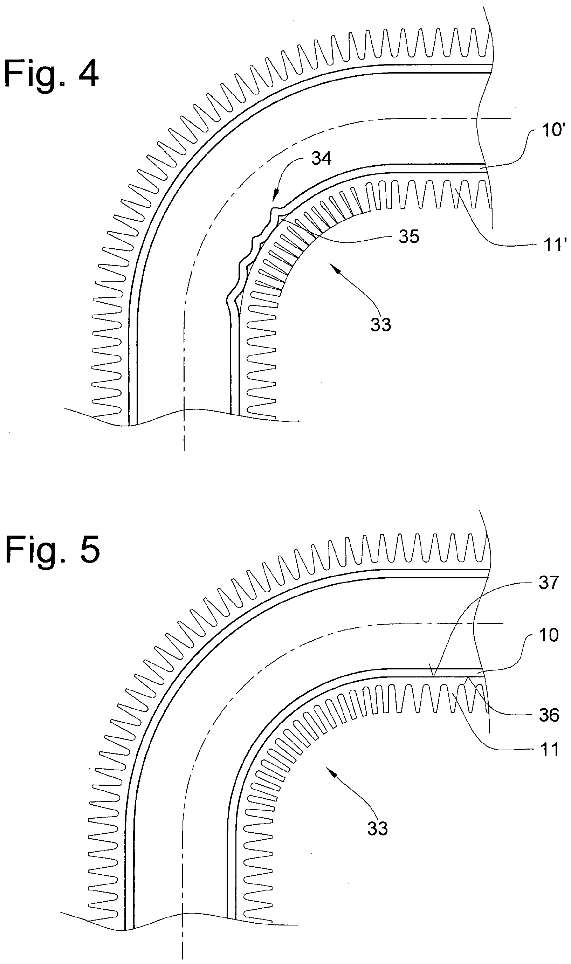

Der Vorteil der Beaufschlagung des Rippenrohres während des Wendelvorganges ergibt sich insbesondere durch einen Vergleich der Figuren 4 und 5. Fig. 4 stellt hierbei eine Schnittansicht eines Ausschnittes eines bogenförmigen Bereiches eines Rippenrohres dar, wobei das Innenrohr 10' insbesondere im Bereich seines Innenradius 33 eine unerwünschte Wellung 34 aufweist, welche insbesondere dazu führt, dass zwischen dem Innenrohr 10' und dem Außenrohr 11' Kavitäten 35 entstehen. Gemäß Fig. 4 ist die Innenseite des Außenrohres 11' zwar glatt dargestellt, dies jedoch lediglich aus Gründen der Übersichtlichkeit. Tatsächlich wird auch diese Innenseite gewisse Wellungen erfahren.

Fig. 5 stellt hingegen einen Querschnitt durch einen bogenförmigen Abschnitt einer erfindungsgemäßen Rippenrohrwendel dar, welche mit einem erfindungsgemäßen Verfahren 3a, also unter Verwendung von Support-Medium, gebogen wurde. Hier zeigt sich, dass die Außenseite 36 des Innenrohres 10 selbst im Bereich des Innenradius 33 glatt und sauber auf der Innenseite 37 des Außenrohres 11 anliegt. Insbesondere sind keine Kavitäten in diesem Bereich erkennbar. Hierdurch wird eine optimierte Wärmeübertragung zwischen dem in dem Innenrohr 10 angeordneten Brauchwasser und dem Medium außerhalb des Rippenrohres ermöglicht.

Abschließend sei bezüglich Fig. 5 noch angemerkt, dass diese Figur lediglich schematisch zu verstehen ist. Sie kann beispielsweise einen Abschnitt darstellen, wie er in Fig. 3 mit 28 gezeichnet ist oder aber auch einen typischen Wendelabschnitt, wie er mehrfach in Fig. 6 dargestellt ist.

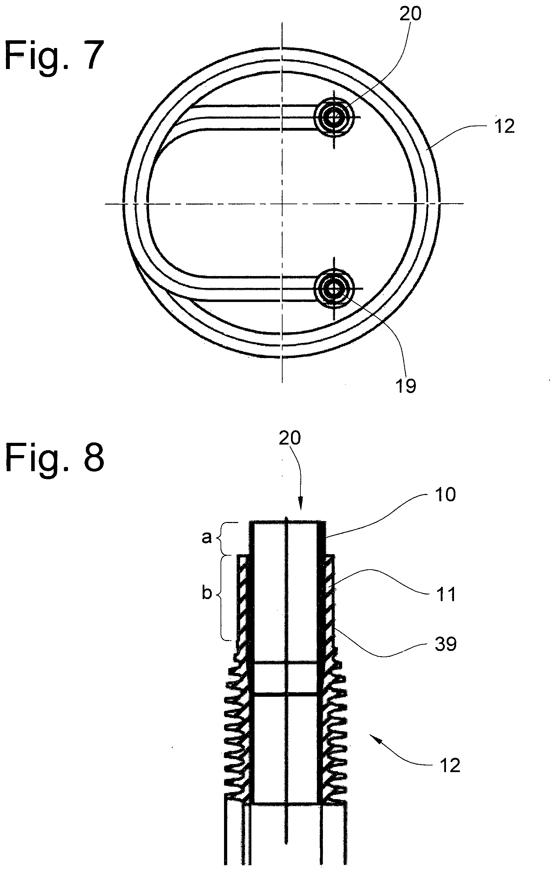

Diese Fig. 6 zeigt hierbei einen Rippenrohrkörper 100 nach Art einer Wendel, wobei die einzelnen Wendeln ausweislich Fig. 7 einen grundsätzlich kreisrunden Querschnitt aufweisen. Die beiden Enden der Rohranordnung 12 sind hierbei im Wesentlichen parallel zur Längsachse L der Wendel ausgerichtet und weisen in die gleiche Richtung. Sowohl der Eingang 19 der Rohranordnung als der Ausgang 20 der Rohranordnung sind gemäß Fig. 6 beide aus einem Gehäuse 38 eines erfindungsgemäßen Wärmetauschers herausgeführt.

Bereits Fig. 6 deutet hierbei an, dass das Innenrohr 10 sowohl am Eingang als auch am Ausgang der Rohranordnung 12 aus dem Außenrohr 11 hervorsteht.

Dies ist in Fig. 8 verdeutlicht. Das Innenrohr steht hierbei aus dem Außenrohr um einen Weg a hervor. Andererseits ist in Fig. 8 zu erkennen, dass das Außenrohr 11 entlang eines Anbindungsabschnittes b rippenlos ausgebildet ist und so eine im Wesentlichen glatte Oberfläche 39 aufweist. Insbesondere kann die Rohranordnung 12 entlang dieser glatten Oberfläche 39 des Außenrohres 11 durch das Gehäuse 38 des Wärmetauschers hindurchgeführt sein.

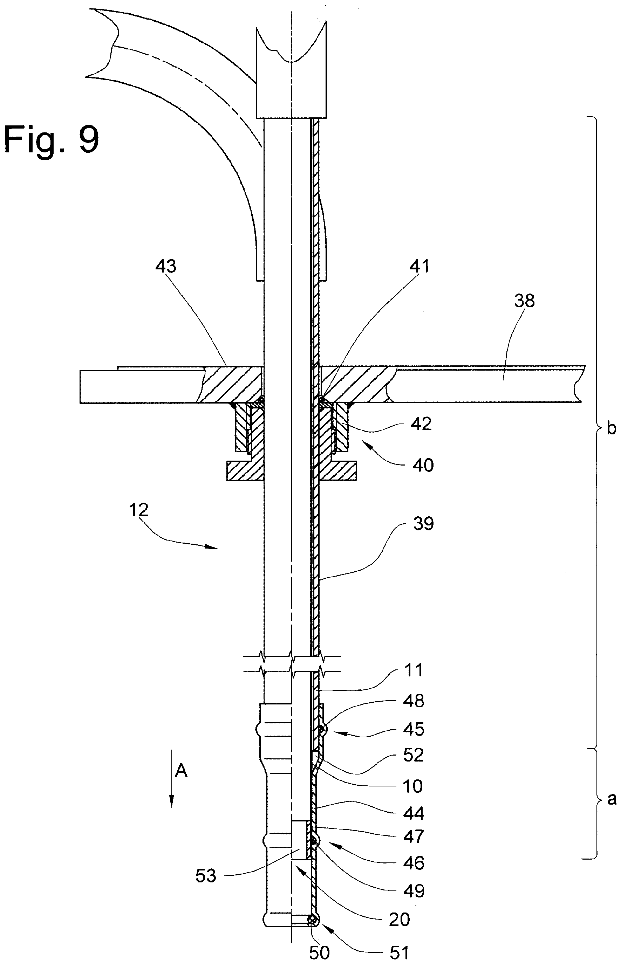

Dies verdeutlicht auch die Fig. 9. Die Rohranordnung 12 steht ausweislich der Fig. 9 im Bereich b aus dem Gehäuse 38 hervor. Hierzu ist eine Abdichtung 40 des Gehäuses 38 vorgesehen, welche beispielsweise einen Dichtungsring 41 sowie eine Außenmuffe 42 vorsieht. Diese dient insbesondere dazu, dass kein Medium von der Innenseite 43 des Gehäuses 38 nach außen dringen kann.

In Fig. 9 sind aber noch weitere Besonderheiten zhu erkennen, welche insbesondere in den Figuren 6 und 8 noch nicht dargestellt waren. So ist dem dargestellten Rohrende eine sogenannte Fittinghülse 44 aufgesetzt. Diese Fittinghülse überstülpt sowohl den Abschnitt a des Innenrohres 10 als auch Teile des Abschnittes b des Außenrohres 11. Um dies zu gewährleisten, verbreitert sich die Fittinghülse 44 entgegen der Anschlussrichtung A stufenartig. Eine erste Stufe ist hierbei dem Oberflächenabschnitt 39 des Außenrohres zugeordnet. Eine zweite Stufe dem Abschnitt a des Innenrohres.

Desweiteren fällt auf, dass die Fittinghülse 44 drei Fittingbereiche aufweist. Ein erster Fittingbereich 45 ist der Oberfläche 39 des Außenrohres 11 zugeordnet und dort insbesondere einem Anbindungsabschnitt, welcher von der Oberfläche 39 bereitgestellt wird.

Ein zweiter Fittingbereich 46 ist einem Befestigungsabschnitt 47 an der Außenseite des Innenrohres 10 zugeordnet, im Bereich des Abschnittes a. Schließlich besteht ein dritter Fittingbereich 51 in Anschlussrichtung A am Ende der Fittinghülse 44. Jedem der Fittingbereiche 45, 46 und 51 ist hierbei eine ringartige Dichtung 48, 49, 50 zugeordnet, welche grundsätzlich einen kreisförmigen Querschnitt aufweist. Da die Dichtungen 48 und 49 im Gegensatz zu der dargestellten Dichtung 50 einen gequetschten oder gepressten Querschnitt aufweisen, kann bereits der Zeichnung entnommen werden, dass die Fittingbereiche 45 und 46 im Gegensatz zum Fittingbereich 51 bereits bearbeitet bzw. verpresst wurden.

Hierzu wurde mit einem gängigen Fittingwerkzeug, beispielsweise einer Fittingzange, ein Pressdruck auf die Bereiche 45 und 46 ausgeübt und die Fittinghülse 44 an diesen Bereichen an dem Innenrohr 10 bzw. an dem Außenrohr 11 verpresst. Durch den Einsatz der Fittingwerkzeuge, welche insbesondere hierfür vorgesehene Backen aufweisen (wobei die Backen typischerweise jedenfalls abschnittsweise polygonale, im Querschnitt Polygonzügen entsprechende Pressflächen aufweisen), wird die Hülse 44 an der Rohranordnung 12 unverlierbar befestigt. Durch den Einsatz des Presswerkzeugs entsteht insbesondere ein Formschluss zwischen Hülse 44 und Rohranordnung 12, also insbesondere ein Formschluss zwischen Fittingbereich 46 und Innenrohr 10 sowie zwischen Fittingbereich 48 und Innenrohr 11.

Der äußerste Fittingbereich 51 oder Anschlussbereich ist noch nicht verpresst worden. Der Wärmetauscher, wie er in Fig. 9 abschnittsweise dargestellt ist, kann nämlich werkseitig so wie in Fig. 9 dargestellt, mit verpresster Hülse 44, vorbereitet werden und dann an einen Einsatzort, beispielsweise ein Wohngebäude, geliefert werden. Vor Ort, also bei der Montage, kann die Fittinghülse 44 dann zur Verbindung der Rohranordnung 12 mit einem nicht dargestellten Anschlussrohr auch mit dem Anschlussrohr verpresst werden (nämlich über den Fittingbereich 51). Das Anschlussrohr kann dazu beispielsweise vom Fittingbereich 51 der Hülse 44 übersteckt und dann verpresst werden. Hierbei würde natürlich auch die dargestellte Ringdichtung 50 gequetscht bzw. verpresst um eine möglichst gute Dichtung zu erreichen.

Die in Fig. 9 dargestellte stufige Ausbildung der Außenhülse 44 dient hierbei insbesondere zwei Zwecken:
Erstens wird die Stabilität des Anschlussbereiches erhöht, da das Außenrohr 11 eine sehr viel dickere Wandstärke hat, als das Innenrohr 10. Eine Verpressung allein am Innenrohr 10 würde möglicherweise nicht genug Stabilität bieten, daher die zusätzliche Verpressung am Außenrohr 11. Zudem bietet die stufenartige Ausbildung der Hülse 44 einen Schutz im Bereich 52, also in dem Bereich, in welchem das innere Rohr 10 aus dem Außenrohr 11 herausragt. Insofern kann keine Flüssigkeit oder Verschmutzung ungewollt in den Bereich zwischen den beiden Rohren eintreten.

Zuallerletzt soll noch eine weitere Besonderheit der vorliegenden Erfindung beschrieben werden: So zeigt Fig. 9 eine Stützhülse 53, deren Außendurchmesser geringfügig kleiner ist als der Innendurchmesser des Innenrohres 10. Der Stützhülse wird bei der Montage (insbesondere vor Montage der der Fittinghülse 44) in das Innenrohr 10 eingebracht. Die Stützhülse 53 ist hierbei dem Ausgang bzw. Eingang der Rohranordnung 12 zugeordnet und vor allen Dingen im Bereich a, in welchem das Innenrohr 10 aus dem Außenrohr 11 heraustritt. Obwohl das Innenrohr 10 lediglich eine sehr geringe Wandstärke aufweist, sorgt die Stützhülse 53 dafür, dass im Bereich 46 trotzdem eine Verpressung stattfinden kann. Die Stützhülse 53 kann entweder werkseitig in das Innenrohr 10 eingebracht werden und wird durch den Verpressvorgang unverlierbar in der Rohranordnung 12 gehalten. Alternativ ist es auch vorstellbar, dass ein Rippenrohrkörper mit einer losen Stützhülse 53 an den Montageort geliefert wird (und insbesondere auch mit einer losen Fittinghülse) und dass insbesondere die Stützhülse 53 dann vor Ort zunächst in das Innenrohr 10 eingesetzt wird und anschließend einen Verpressvorgang unterstützt.

## Patentansprüche

1. Verfahren zur Bereitstellung eines Rippenrohrkörpers (100) eines Wärmetauschers, insbesondere für die Leitung von Brauchwasser, umfassend die Schritte:
- Einbringen eines, insbesondere geraden, Innenrohres (10) in ein Außenrohr (11) zur Erlangung einer Rohranordnung (12),
- Ausformen von Rippen (13) an dem Außenrohr (11), insbesondere durch einen Walzvorgang,
**gekennzeichnet durch** folgende Schritte:
- Beaufschlagen des Innenrohrs (10) mit einem Supportfluid, insbesondere einer Flüssigkeit,
- Biegen der Rohranordnung (12), insbesondere in eine Wendelform.

2. Verfahren nach Anspruch 1, **gekennzeichnet durch** den Verfahrensschritt:
- Verschließen eines Ausgangs (20) des Innenrohres (10), insbesondere durch ein Ventil (24), und / oder Verbinden eines Eingangs (19) des Innenrohres (10) mit einer Fördereinrichtung (25) für das Supportfluid.

3. Verfahren nach Anspruch 1 oder 2, **gekennzeichnet durch** den Verfahrensschritt:
- Nachführen von Supportfluid während des Biegens.

4. Verfahren nach einem der voranstehenden Ansprüche, **gekennzeichnet durch** den Verfahrensschritt:
- Einbringen einer nutartigen Reliefstruktur in die Innenseite (18) des Innenrohres (10), insbesondere während des Ausformens von Rippen (13) an dem Außenrohr (11).

5. Verfahren nach einem der voranstehenden Ansprüche, **gekennzeichnet durch** den Verfahrensschritt:
- Verbinden des Rippenrohrkörpers (100) mit einem Anschlussrohr in einem Pressfittingverfahren.

6. Verfahren nach einem der voranstehenden Ansprüche, **gekennzeichnet durch** den Verfahrensschritt:
- Verbinden eines aus dem Außenrohr (11) vorstehenden Befestigungsabschnittes (a) des Innenrohres (10) mit einer Fittinghülse (44).

7. Verfahren nach einem der voranstehenden Ansprüche, **gekennzeichnet durch** den Verfahrensschritt:
- Verbinden eines rippenlosen Anbindungsabschnittes (b) des Aussenrohres (11) mit einer Fittinghülse (44).

8. Verfahren nach einem der Ansprüche 5 bis 7, **gekennzeichnet durch** den Verfahrensschritt:
- Einbringen einer Stützhülse (53) in das Innenrohr (10) in dem mit dem Anschlussrohr zu verbindenden Bereich.

9. Rippenrohrwendel (100) eines Wärmetauschers, insbesondere hergestellt nach einem der voranstehenden Ansprüche, umfassend ein Innenrohr (10) aus Edelstahl oder Titan und ein Außenrohr (11) aus Kupfer oder Aluminium, wobei das Außenrohr (11) gewalzte Rippen (13) aufweist, **dadurch gekennzeichnet, dass** das Innenrohr (10) glatt an der Innenseite des Außenrohres (11) anliegt.

10. Rippenrohrwendel (100) nach Anspruch 9, **dadurch gekennzeichnet, dass** die Rippenrohrwendel in mindestens einem Endbereich eine in das Innenrohr (10) eingeführte Stützhülse (53) aufweist.

11. Rippenrohrwendel (100) nach Anspruch 9 oder 10, **dadurch gekennzeichnet, dass** das Innenrohr (10) an mindestens einem Ende aus dem Außenrohr (11), zur Bereitstellung einer Anschlussfläche, heraussteht, wobei an der Anschlussfläche insbesondere eine Fittinghülse (44) verpresst angebracht ist.

## Claims

1. Method for providing a finned tubular body (100) for a heat exchanger, particularly for pipes for process water, comprising the steps of:
- inserting a, particularly straight, inner pipe (10) into an outer pipe (11) to obtain a pipe arrangement (12),
- forming fins (13) on the outer pipe (11), particularly by a rolling operation,
**characterized by** the steps of:
- applying a support fluid, particularly a liquid, to the inner pipe (10),
- bending the pipe arrangement (12), particularly into the form of a coil.

2. The method according to claim 1, **characterized by** the step of:
- closing the exit (20) of the inner pipe (10), particularly by a valve (24), and/or connecting the intake (19) of the inner pipe (10) with a conveyor system (25) for the support fluid.

3. The method according to claim 1 or 2, **characterized by** the step of:
- replenishing support fluid while bending.

4. The method according to one of the preceding claims, **characterized by** the step of:
- forming a groove-like relief structure at the inner surface (18) of the inner pipe (10), particularly while forming fins (13) on the outer pipe (11).

5. The method according to one of the preceding claims, **characterized by** the step of:
- connecting the finned tubular body (100) to a connection pipe by press fitting.

6. The method according to one of the preceding claims, **characterized by** the step of:
- connecting a fastening portion (a) of the inner pipe (10) projecting from the outer pipe (11) to a fitting sleeve (44).

7. The method according to one of the preceding claims, **characterized by** the step of:
- connecting a connection portion (b) of the outer pipe (11) having no fins to a fitting sleeve (44).

8. The method according to one of the claims 5 to 7, **characterized by** the step of:
- inserting a supporting sleeve (53) into the inner pipe (10) at the portion to be connected to the outer pipe.

9. Finned tube coil (100) of a heat exchanger, particularly produced according to any of the preceding claims, comprising an inner pipe (10) made of stainless steel or titanium and an outer pipe (11) made of copper or aluminium, the outer pipe (11) having rolled fins (13), **characterized in that** the inner pipe (1) smoothly abuts the inner surface of the outer pipe (11).

10. Finned tube coil (10) according to claim 9, **characterized in that** the finned tube coil comprises a supporting sleeve (53) inserted into at least one end portion of the inner pipe (11).

11. Finned tube coil (10) according to claim 9 or 10, **characterized in that** the inner pipe (10) projects at least from one end portion of the outer pipe (11) providing a connection surface, whereby preferably a fitting sleeve (44) is pressed on said connection surface.

## Revendications

1. Procédé de préparation d'un corps tubulaire rainuré (100) d'un échangeur de chaleur, en particulier pour la conduite d'eau de service, comprenant les étapes de
- mise en place d'un tube intérieur (10) en particulier rectiligne, dans un tube extérieur (11) pour réalisation d'un ensemble de tubes (12),
- réalisation de rainures (13) sur le tube extérieur (11), en particulier par laminage,
**caractérisé par** les étapes suivantes :
- mise sous pression du tube intérieur (10) avec un fluide de support, en particulier un liquide,
- pliage de l'ensemblet de tubes (12), en particulier pour former une bobine.

2. Procédé selon la revendication 1, **caractérisé par** l'étape de procédé consistant à obturer une sortie (20) du tube intérieur (10), en particulier par une vanne (24) et/ou à raccorder une entrée (19) du tube intérieur (10) avec un dispositif de transport (25) pour le fluide de support.

3. Procédé selon la revendication 1 ou 2, **caractérisé par** l'étape de procédé consistant à suivre le fluide de support pendant le pliage.

4. Procédé selon l'une des précédentes revendications, **caractérisé par** l'étape de procédé consistant à mettre en place une structure en relief en forme de rainure dans le côté intérieur (18) du tube intérieur (10), en particulier pendant la réalisation des rainures (13) sur le tube extérieur (11).

5. Procédé selon l'une des précédentes revendications, **caractérisé par** l'étape de procédé consistant à raccorder le corps tubulaire rainuré (100) avec un tube de raccordement dans un procédé d'emmanchement à la presse.

6. Procédé selon l'une des précédentes revendications, **caractérisé par** l'étape de procédé consistant à raccorder une section de fixation (a), faisant saillie du tube extérieur (11), du tube intérieur (10) avec un manchon de raccordement (44).

7. Procédé selon l'une des précédentes revendications, **caractérisé par** l'étape de procédé consistant à raccorder une section de liaison (b) sans rainure du tube extérieur (11) avec un manchon de raccordement (44).

8. Procédé selon l'une des revendications 5 à 7, **caractérisé par** l'étape de procédé consistant à mettre en place un manchon de support (53) dans le tube intérieur (10) dans la zone à relier avec le tube de raccordement.

9. Bobine de tuyau rainuré (100) d'un échangeur de chaleur, en particulier fabriquée selon l'une des précédentes revendications, comprenant un tube intérieur (10) en acier inoxydable ou titane et un tube extérieur (11) en cuivre ou aluminium, le tube extérieur (11) présentant des rainures (13) réalisées par laminage, **caractérisée en ce que** le tube intérieur (10) est positionné de façon lisse au niveau du coté intérieur du tube extérieur (11).

10. Bobine de tuyau rainuré (100) selon la revendication 9, **caractérisée en ce que** la bobine de tuyau rainuré présente, dans au moins une zone d'extrémité, un manchon de support (53) introduit dans le tube intérieur (10).

11. Bobine de tuyau rainuré (100) selon la revendication 9 ou 10, **caractérisée en ce que** le tube intérieur (10) dépasse au niveau d'au moins une extrémité du tube extérieur (11) pour mise à disposition d'une face de raccordement, un manchon de raccordement (44) étant en particulier placé comprimé au niveau de la face de raccordement.
